# EUROPÄISCHE PATENTSCHRIFT

(11) **EP 1 998 610 B1**
(45) Veröffentlichungstag und Bekanntmachung des Hinweises auf die Patenterteilung: **15.09.2021**
(21) Anmeldenummer: 07711721.6
(22) Anmeldetag: 01.03.2007
(51) Int. Cl.: A01K 31/16, B65G 47/52, B65G 17/36

(54) **FÖRDERVORRICHTUNG FÜR STOSSEMPFINDLICHE PRODUKTE**
CONVEYING DEVICE FOR SHOCK-SENSITIVE PRODUCTS
DISPOSITIF DE TRANSPORT DE PRODUITS SENSIBLES AUX CHOCS

(30) Priorität: 02.03.2006 DE 202006003445 U
(43) Veröffentlichungstag der Anmeldung: 10.12.2008
(73) Patentinhaber: Big Dutchman International GmbH, 49377 Vechta (DE)
(72) Erfinder: MIX, André, 49377 Vechta (DE)
(74) Vertreter: Eisenführ Speiser
(86) Internationale Anmeldenummer: PCT/EP2007/001744
(87) Internationale Veröffentlichungsnummer: WO 2007/098942

(56) Entgegenhaltungen:
- EP-A- 0 414 487
- FR-A- 2 030 824
- FR-A- 2 780 247
- NL-A- 8 002 232
- US-A- 3 722 743
- US-A- 4 199 051
- US-A- 5 165 514
- US-A- 5 490 591
- US-B1- 6 382 404
- None

## Beschreibung

Die Erfindung betrifft eine Fördervorrichtung für stoßempfindliche Produkte, umfassend ein Förderband mit zumindest einem Einzelfach zur Aufnahme zumindest eines Produkts, einem aufwärts gerichteten Förderbandstrang und einem abwärts gerichteten Förderstrang, eine obere Umlenkeinrichtung zum Umlenken des Förderbands aus dem aufwärts gerichteten Förderstrang in den abwärts gerichteten Förderstrang, wobei das Einzelfach durch eine erste Auflagefläche zur Abstützung eines darin abgelegten Produkts bei der Aufwärtsförderung, eine zweite Auflagefläche zur Abstützung eines darin abgelegten Produkts bei der Abwärtsförderung, und eine Bodenfläche zur Abstützung des Produkts bei der Bewegung des Förderbands über die obere Umlenkeinrichtung begrenzt ist.

Solche Fördervorrichtungen finden beispielsweise in vielen Bereichen des produzierenden Gewerbes Anwendung. Eine typische Anwendung für solche Fördervorrichtungen ist der Transport von Hühnereiern innerhalb eines Stallgebäudes. Ein typischer Aufbau eines Stallgebäudes für eierlegendes Geflügel besteht darin, dass die Käfige oder Volieren entlang mehrerer Käfigreihen parallel zueinander und in mehreren Etagen übereinander angeordnet sind. Die gelegten Eier werden mit Hilfe entlang dieser Reihen verlaufender Längsförderbänder für jede Etage zur Stirnseite des Stallgebäudes gefördert. An der Stirnseite ist es üblich, die Eier mit den übereinander gestapelten Längsbändern jeder Reihe auf ein Querband zu befördern, um sie mit Hilfe dieses Querbands aus dem Stallgebäude zur weiteren Verarbeitung zu fördern.

Um diesen Umschlag der Eier von den vertikal übereinander gestapelten Längsförderbändern auf ein Querband zu bewerkstelligen wird üblicherweise eine Fördervorrichtung eingesetzt, die mit Hilfe eines aufwärts gerichteten Förderbandstrangs die Eier von den einzelnen Längsförderbändern entnimmt und aufwärts zu einer Umlenkeinrichtung fördert. In dieser Umlenkeinrichtung werden die Eier über einen höchsten Punkt der Fördervorrichtung hinweggefördert und hiernach in einem abwärts gerichteten Förderstrang nach unten auf das Querband gefördert.

Es ist bekannt, zu diesem Zweck ein Endlosförderband zu verwenden, das durch eine obere und untere Umlenkrolle in zwei Trumms unterteilt wird, einen Aufwärtstrumm und einen Abwärtstrumm. In gleichmäßigen Abständen zueinander sind auf dem Förderband Trennwände angeordnet, die sich etwa senkrecht zur Förderbandoberfläche und quer zur Förderrichtung erstrecken und zwischen sich einzelne Fächer ausbilden. In diesen Fächern können die Eier sowohl bei aufwärts als auch bei abwärts gerichteter Förderrichtung gefördert werden und bei entsprechender Ausbildung der Trennwände, beispielsweise mit einer entsprechenden vorderen Kante, kann selbst bei senkrechter Förderrichtung verhindert werden, dass die Eier aus dem Fach herausfallen.

Ein Problem bei diesen vorbekannten Fördervorrichtungen besteht darin, dass der Abstand zwischen zwei Trennwänden üblicherweise größer gewählt werden muss, als es die Abmessung des zu fördernden Eies erfordern würde. Dies ist notwendig, um die Be- und Entladung der Fächer zu ermöglichen und um etwaigen aufgestellten Eiern oder Größenabweichungen unter den Eiern gerecht zu werden. Ein hierdurch auftretender Nachteil besteht jedoch darin, dass die Eier sich im Bereich der oberen Umlenkeinrichtung von der Auflagefläche bei Aufwärtsförderung zu der Auflagefläche bei Abwärtsförderung bewegen müssen und dies typischerweise durch schnelles Abrollen des Eies innerhalb des Fachs nach Überschreiten des höchsten Punkts der Umlenkeinrichtung erfolgt. Das Ei wird hierdurch häufig so stark beschleunigt und erfährt bei Kontakt mit der Auflagefläche zur Abwärtsförderung eine so große Stoßkraft, dass eine Beschädigung des Eies auftritt. So ist zum Beispiel aus US5490591 eine Fördervorrichtung bekannt, die ein Förderband, das aus mehreren miteinander gekoppelten Förderbandgliedern zusammengesetzt ist, umfasst. Dabei sind jeweils wechselweise plane erste Förderbandglieder und mit speziellen, sich auswärts erstreckenden Armen versehene zweite Förderbandglieder miteinander gekoppelt. Zwischen den Armen zweier benachbarter, über ein planes erstes Förderbandglied gekoppelter zweiter Förderbandglieder bildet sich ein Einzelfach aus. Im Umlenkpunkt bilden sich bei dieser Fördervorrichtung zwei in Richtung des Einzelfachs vorstehende Kanten im Bereich der beiden Kopplungsstellen des planen ersten Förderbandglieds und der beiden zweiten Förderbandglieder aus.

Ein weiterer Nachteil der bekannten Fördervorrichtungen besteht darin, dass sie oftmals nur mit großen Aufwand an spezifische Bedingungen innerhalb des Stalls angepasst werden können. So ist es oftmals wünschenswert, die Breite jedes einzelnen Fachs entsprechend der pro Zeiteinheit angelieferten Eier zu wählen und somit individuell die Vertikalfördervorrichtung an die örtlichen Gegebenheiten anzupassen. Dies kann bislang nur mit Spezialanfertigungen von Vertikalförderbändern erzielt werden und zudem nicht mehr nachträglich, beispielsweise bei Stallerweiterungen, geändert werden.

Schließlich besteht ein weiterer Nachteil der bekannten Fördervorrichtungen darin, dass sie durch die vorgegebene Länge der Vertikalförderbänder eine vorgegebene Bauhöhe aufweisen und somit auch in dieser Hinsicht nur mit großem Aufwand an örtliche Gegebenheiten anpassbar sind. So ist zum Beispiel aus NL8002232A eine für den Eiertransport vorgesehene Fördervorrichtung bekannt, bei der wannenförmige Einzelfächer an einem Förderband befestigt sind. Bei dieser Fördervorrichtung soll das Bruchrisiko der Eier bei Durchlaufen des Oberen Umlenkpunktes der Fördervorrichtung durch ein flexibles Nachgeben der Auflagefläche, an der die Eier beim Durchlaufen des Umlenkpunktes anschlagen, gemindert werden.

Der Erfindung lag die Aufgabe zugrunde, eine Vertikalfördervorrichtung bereitzustellen, welche zumindest eines der vorgenannten Probleme verringert und vorzugsweise vollständig vermeidet.

Dies wird erfindungsgemäß mit einer Fördervorrichtung nach Anspruch 1 erreicht. Durch die gezielte Bereitstellung einer Wölbung, um hierdurch die Stoßkraft auf einen unkritischen Wert zu begrenzen, erreicht die erfindungsgemäße Fördervorrichtung, dass ein sanftes Gleiten oder Abrollen der geförderten Produkte von der ersten zur zweiten Auflagefläche stattfindet und somit die Gefahr einer Beschädigung des Produkts bei Durchlaufen der Umlenkeinrichtung erheblich verringert werden kann.

Die Ausgestaltung der Wölbung hängt in erster Linie von der geometrischen Gestaltung der Umlenkeinrichtung ab. Ein weiterer wichtiger Faktor bei der Ausgestaltung der Wölbung ist die Geometrie der geförderten Produkte und die Fördergeschwindigkeit. Schließlich spielt auch die von dem geförderten Produkt sicher vertragene Stoßkraft eine Rolle, da keine Notwendigkeit besteht, die auftretende Stoßkraft deutlich unter diese Schwelle oder gar auf Null zu reduzieren. Die Wölbung der Bodenfläche kann beispielsweise erreicht werden, indem die Bodenfläche aus einem entsprechend harten Material hergestellt wird und mit dieser Wölbung ausgeformt wird. Eine andere Möglichkeit besteht beispielsweise auch darin, das Förderband aus einem weichen, mit geringer Kraft elastisch verformbaren Material herzustellen und die Umlenkeinrichtung so auszubilden, dass sie das Förderband bei Durchlaufen der Umlenkeinrichtung mit einer entsprechenden Wölbung ausformt. Typischerweise wird die Umlenkeinrichtung eine Umlenkrolle aufweisen und die Wölbung wird entgegengesetzt zur Wölbung der Umhüllenden der Außenfläche dieser Umlenkrolle ausgestaltet sein, wenn das Förderband die Umlenkeinrichtung durchläuft.

Erfindungsgemäß besitzt die Wölbung der Bodenfläche eine Krümmung, die entgegengesetzt zum Förderbandverlauf in der Umlenkeinrichtung ist. Auf diese Weise kann das typische, plötzliche Herüberrollen oder -gleiten eines Produkts von der ersten Auflagefläche zur zweiten Auflagefläche bei Durchlaufen einer oberen Umlenkeinrichtung kurz nach Durchlaufen des höchsten Punkts der Umlenkeinrichtung kompensiert werden und erreicht werden, dass das Produkt innerhalb der durch die Wölbung der Bodenfläche ausgebildeten gewölbten Vertiefung sanft von der einen Auflagefläche zur anderen Auflagefläche rollt oder gleitet. Die Wölbung kann mit einem gleichmäßigen Radius oder einem sich ändernden Radius versehen sein. Die Wölbung kann symmetrisch oder asymmetrisch zur Mittelebene zwischen den beiden Auflageflächen sein.

Es ist bevorzugt, dass die obere Umlenkeinrichtung eine Umlenkrolle umfasst und die Wölbung der Bodenfläche entgegen der Krümmung der Umlenkrolle verläuft und einen Krümmungsradius aufweist, der größer oder gleich dem Radius der Umlenkrolle ist. Durch diese Wahl wird sichergestellt, dass kein plötzliches Abrollen oder Gleiten des Produkts zwischen der ersten und zweiten Auflagefläche erfolgen kann.

Das Förderband umfasst eine Vielzahl von Einzelfächern, die alle nach den vorherstehenden Merkmalen ausgebildet sind. Auf diese Weise wird die Effizienz der Fördervorrichtung optimiert und es können in unmittelbar benachbarten Einzelfächern eine Vielzahl von Produkten gefördert werden. Dabei können vorzugsweise in einem Einzelfach auch mehrere Produkte quer zur Förderrichtung nebeneinander angeordnet und gefördert werden. Die ersten und zweiten Auflageflächen benachbarter Einzelfächer können durch einen einzigen Wandabschnitt ausgebildet werden und auf diese Weise eine ideale Raumausnutzung entlang des Förderbands erzielt werden.

Die Vielzahl von Förderbandgliedern sind miteinander gekoppelt. Diese Förderbandkonstruktion erlaubt es, die Länge des Förderbands individuell zu wählen, indem eine entsprechende Anzahl von Förderbandgliedern zusammengesetzt wird und beispielsweise zu einem Endlosförderband gekoppelt wird. Die Zusammensetzung des Förderbands aus mehreren Förderbandgliedern ermöglicht zudem besonders vorteilhafte Fertigungsverfahren für das Förderband, da in diesem Fall nur Förderbandglieder mit begrenzten Abmessungen hergestellt werden müssen, die mit üblichen Produktionsverfahren hergestellt werden können. So eignet sich beispielsweise das Spritzgussverfahren zur Herstellung solcher Förderbandglieder aus einem Hartkunststoff.

Es ist grundsätzlich möglich, mehrere Einzelfächer an einem Förderbandglied anzuordnen, die übereinander angeordnet sind und durch eine Trennwand voneinander abgetrennt sind. Weiterhin können auch in Förderrichtung nebeneinander angeordnete Einzelfächer vorgesehen werden. Ein sowohl aus fertigungstechnischer als auch aus förderungstechnischer Sicht besonders günstiger Aufbau des Förderbands ergibt sich jedoch, wenn jedes Förderbandglied genau ein Einzelfach aufweist, dass sich um eine bestimmte Länge quer zur Förderrichtung erstreckt und eine Höhe aufweist, um ein Produkt bzw. mehrere nebeneinander angeordnete Produkte aufnehmen zu können.

Jedes Förderbandglied weist zumindest einen sich etwa senkrecht zur Förderrichtung erstreckenden Wandabschnitt auf, an dem eine erste und/oder zweite Auflagefläche ausgebildet ist. Grundsätzlich kann an jedem Förderbandglied die erste und zweite Auflagefläche separat ausgebildet sein durch zwei entsprechende, voneinander beabstandete Wandabschnitte. Eine besonders kostengünstige und platzsparende Ausführungsweise besteht aber darin, dass an jedem Förderbandglied nur ein Wandabschnitt ausgebildet ist, der sich etwa senkrecht zur Förderrichtung erstreckt und an dem auf einer Seite die erste oder zweite Auflagefläche desjenigen Einzelfachs ausgebildet ist, dessen Bodenfläche durch dieses Förderbandglied gebildet wird und an dem weiterhin, auf der anderen Seite des Wandabschnitts, eine zweite bzw. erste Auflagefläche ausgebildet ist, die für ein benachbartes, mit dem entsprechenden Förderbandglied gekoppeltes, zweites Förderbandglied wirkt. Der Wandabschnitt wird in diesem Fall vorzugsweise nahe der Kopplungsstelle der beiden Förderbandglieder angeordnet, so dass sich auf diese Weise ein im Querschnitt etwa L- bzw. J-förmiges Förderbandglied ergibt, dessen einer Schenkel entsprechend der erfindungsgemäßen Wölbung der Bodenfläche verläuft.

Die erfindungsgemäße Fördervorrichtung ist aus einer Vielzahl miteinander um eine quer zur Förderrichtung liegende Achse schwenkbar gekoppelter Förderbandglieder zusammengesetzt und jedes Förderbandglied weist einen Bodenwandabschnitt eines Einzelfachs und einen sich etwa senkrecht zur Förderrichtung erstreckenden Wandabschnitt auf, der die erste oder zweite Auflagefläche des Einzelfachs und die zweite bzw. erste Auflagefläche eines Einzelfachs eines benachbart angekoppelten Förderbandglieds ausbildet. Diese Ausführungsform hat sich im täglichen Einsatz sowohl als robust als auch effizient erwiesen und zeichnet sich zudem durch eine günstige Fertigungstechnik für die einzelnen Förderbandglieder und somit für das gesamte Förderband aus. Das Förderband erstreckt sich vorzugsweise über eine bestimmte Länge quer zur Förderrichtung und parallel zur Schwenkachse zwischen den einzelnen Förderbandgliedern, um mehrere Produkte in einem Einzelfach aufnehmen zu können. Insbesondere kann die Fördervorrichtung auch dadurch fortgebildet und in ihrer Förderkapazität erweitert werden, dass mehrere solcher Fördervorrichtungen nebeneinander angeordnet werden, wobei die Einzelfächer dieser Förderbandglieder in Flucht miteinander liegen und somit bei entsprechend geringer Beabstandung der einzelnen Förderbänder voneinander jeweils einzelne Einzelfächer ausbilden.

Es ist weiterhin bevorzugt, wenn zwischen der Auflagefläche für die Aufwärtsförderung und der Bodenfläche eine Bremsrampe ausgebildet ist, die so ausgerichtet ist, dass ein über die Auflagefläche für die Aufwärtsförderung in Richtung der Bodenfläche bewegtes Produkt durch Schwerkrafteinfluss abgebremst wird, bevor es auf die Bodenfläche trifft.

Fördervorrichtungen der erfindungsgemäßen Art werden häufig in der Weise mit Produkten beschickt, dass über eine horizontal fördernde Vorrichtung, wie einen Bandförderer oder dergleichen, die Produkte angeliefert werden und in die Einzelfächer der Fördervorrichtung abgelegt werden. Regelmäßig bewegt sich das solcherart zugelieferte Produkt dabei über die erste Auflagefläche des Einzelfachs in Richtung der Bodenfläche und kommt im Übergangsbereich zwischen erster Auflagefläche und Bodenfläche zu liegen. Die schwerkraftbedingte Beschleunigung des Produkts bei dessen Bewegung über die erste Auflagefläche und/oder die aus der Zulieferung durch die Horizontalfördervorrichtung noch verbleibende Fördergeschwindigkeit des Produkts führt dabei regelmäßig zu einem Anstoßen des Produkts an der Bodenfläche, was einerseits akustisch störend sein kann und darüber hinaus möglicherweise sogar eine Beschädigung des Produkts verursachen könnte. Nach der erfindungsgemäßen Fortbildung wird daher eine Bremsrampe bereitgestellt, die das Produkt vor dem Anschlagen an die Bodenfläche entgegen der Schwerkraft nach oben führt und daher die Bewegungsgeschwindigkeit des Produkts soweit verringert, dass ein Anschlagen vermieden oder zumindest zu einem nicht mehr relevanten Maß verringert wird. Die Bremsrampe kann als gerade, in Schwerkraftrichtung aufwärts gerichtete Rampenfläche oder als gekrümmt verlaufende Fläche ausgebildet sein.

Es ist weiterhin bevorzugt, wenn die Bodenfläche zumindest in dem Bereich, in dem ein von der Auflagefläche für die Aufwärtsförderung zur Bodenfläche bewegtes Produkt anstößt, einen Dämpfungswandabschnitt aufweist. Auch diese Fortbildung der Erfindung ist insbesondere hinsichtlich des Anstoßens des der Fördervorrichtung zugelieferten Produkts an der Bodenfläche relevant und vermeidet eine mechanische Belastung des Produkts und eine akustische Beeinträchtigung der Umgebung, indem die durch eine elastische Dämpfung im Bereich des Anstoßpunktes des Produkts eine schonende Produktverzögerung und ein sanftes Anschlagen erreicht wird.

Dabei ist der Dämpfungswandabschnitt vorzugsweise plan und stufenfrei zur Bodenfläche angeordnet. Diese Fortbildung ist insbesondere vorteilhaft, da sich das Produkt bei dem weiteren Fördervorgang vom Dämpfungswandabschnitt weg bewegt und hierbei vorzugsweise keine in der Bodenfläche ausgebildete Stufe überwinden sollte, da dies wiederum zur Produktbeschädigung führen könnte. Der Dämpfungswandabschnitt kann daher insbesondere durch einen eingebetteten Materialstreifen, beispielsweise einen Schaumstoffstreifen gebildet werden, dessen Oberfläche kontinuierlich mit der übrigen Oberfläche der Bodenfläche verläuft.

Ein weiterer Aspekt der Erfindung ist ein Förderbandglied zur Verwendung in einer Fördervorrichtung der zuvor beschriebenen Art nach Anspruch 6.

Ein solches Förderbandglied eignet sich dazu, eine Fördervorrichtung, wie sie zuvor beschrieben wurde, modular aufzubauen, indem mehrere Förderbandglieder miteinander so gekoppelt werden, dass sie ein zusammenhängendes Förderband ausbilden und gegebenenfalls mehrere solcher Förderbänder nebeneinander angeordnet werden, um ein Förderband einer gewünschten Breite bereitzustellen.

Das erfindungsgemäße Förderbandglied kann ein Einzelfach oder mehrere Einzelfächer haben, die sich vorzugsweise quer zur Förderbandrichtung und in Förderbandebene erstrecken, um mehrere Eier in sich aufnehmen zu können. Die Einzelfächer müssen durch Auflageflächen begrenzt werden, die ein Herausfallen eines im Einzelfach abgelegten Eis bei Aufwärts- und bei Abwärtsförderung verhindern.

Die Bodenfläche des Förderbandglieds liegt typischerweise etwa in der Förderbandebene und dient in erster Linie dazu, ein im Einzelfach abgelegtes Produkt abzustützen, wenn das Förderbandglied sich durch eine obere Umlenkeinrichtung bewegt.

Erfindungsgemäß ist die Bodenfläche dauerhaft, zumindest aber bei Durchlauf der oberen Umlenkeinrichtung so gewölbt, dass bei dessen Durchlauf durch die obere Umlenkeinrichtung eine kritische Stoßkraft vermieden wird, wenn das Produkt von der Auflagefläche für die Aufwärtsförderung zu der Auflagefläche für die Abwärtsförderung rollt oder gleitet. Zu diesem Zweck kann die Bodenfläche beispielsweise starr gewölbt sein oder so ausgebildet sein, dass sei bei Durchlauf der oberen Umlenkeinrichtung eine entsprechende Wölbung ausbilden kann. Die genaue Ausgestaltung dieser Wölbung ist von verschiedenen Parametern abhängig, wie zuvor im Zusammenhang mit der erfindungsgemäßen Fördervorrichtung beschrieben.

Die zweite Auflagefläche ist an einem Wandabschnitt eines benachbart angekoppelten, zweiten Förderbandglied ausgebildet. Für ein Einzelfach, welches an den Rand des Förderbandglieds heranreicht, wird ein Wandabschnitt eines benachbarten Förderbandglieds als Auflagefläche genutzt. Dies eignet sich insbesondere dann, wenn jedes Förderbandglied genau ein Einzelfach aufweist. Es ist jedoch in bestimmten Anwendungen auch vorteilhaft, Kombinationen aus zubilden, bei denen im Mittelbereich des Förderbandglieds angeordnete Einzelfächer durch Wandabschnitte des Förderbandglieds selbst begrenzt werden und ein in den Randbereichen oder in einem Randbereich angeordnetes Einzelfach durch eine Auflagefläche eines benachbarten Förderbandglieds begrenzt wird.

Dabei ist es insbesondere vorteilhaft, wenn alle Förderbandglieder baugleich sind und jeweils einen Wandabschnitt aufweisen, der eine erste und eine zweite Auflagefläche definiert. Auf diese Weise lässt sich eine fertigungstechnisch günstige Herstellung der Förderbandglieder realisieren und der modulare Aufbau eines Förderbands aus dem Förderbandglied in einfacher Weise bewerkstelligen.

Weiterhin ist es bevorzugt, wenn die Wölbung der Bodenfläche eine in Richtung des Einzelfachs konkav ausgebildete Krümmung besitzt. Hierdurch wird eine Mulde ausgebildet, in der ein Produkt bei Abstützung auf der Bodenfläche abrollen oder gleiten kann, wenn es sich von der ersten zur zweiten Auflagefläche bewegen muss.

Weiterhin ist es bevorzugt, wenn die Bodenfläche eine Krümmung aufweist, die entgegengesetzt zu der Krümmung der Umhüllenden einer Umlenkrolle ist, mit der ein aus mehreren gekoppelten Förderbandgliedern zusammengesetztes Förderband umgelenkt wird, und die einen gleichmäßigen Krümmungsradius aufweist, der vorzugsweise größer oder gleich dem Radius dieser Umlenkrolle ist. Auf diese Weise kann die durch die Umlenkrolle hervorgerufene Bahnbewegung der Produkte durch die Wölbung der Bodenfläche zumindest kompensiert werden oder sogar ein Abrollen oder Gleiten der Produkte in einer durch die Bodenfläche gebildeten Mulde erreicht werden.

Weiterhin ist es bevorzugt, wenn eine an der in Förderrichtung vorne liegenden Kante ausgebildete Kopplungsvorrichtung, die dazu ausgebildet ist, das Förderbandglied um eine quer zur Förderrichtung und in Förderbandebene liegende Achse schwenkbar mit einer in Förderrichtung hinten liegenden Kante eines gleichartigen Förderbandglieds zu koppeln, vorgesehen ist. Diese Kopplungsvorrichtung kann insbesondere als sich ergänzend ausgebildete Anschlusselemente gestaltet sein, beispielsweise in Form von mehreren ineinandergreifenden Scharnierhülsen, die durch eine gemeinsame Achse miteinander verbunden werden oder in Gestalt von Achsabschnitten und darin einhängbaren oder einclipbaren hakenförmigen oder clipförmigen Kopplungsabschnitten.

Weiterhin ist es bevorzugt, wenn sich das Einzelfach quer zur Förderrichtung und in Förderbandebene längs erstreckt und mehrere Produkte nebeneinander aufnehmen kann. So können in einem Einzelfach mehrere Produkte aufgenommen werden und zudem durch nebeneinanderliegende Anordnung mehrerer Förderbandglieder auf einzelne Anwendungsfälle abgestimmte, sich in bestimmter Länge erstreckender Einzelfächer ausgebildet werden.

Es ist weiterhin bevorzugt, wenn eine seitliche Verbindungsvorrichtung zur starren Kopplung des Förderbandglieds mit einem in Förderrichtung neben dem Förderbandglied angeordneten weiteren Förderbandglied in einer solchen Weise, dass die Einzelfächer der beiden Förderbandglieder ein sich quer zur Förderrichtung und in Förderbandebene längs erstreckendes Einzelfach ausbilden, das mehrere Produkte nebeneinander aufnehmen kann, vorhanden ist. Hierdurch wird ein modularer Aufbau durch eine Aneinanderreihung mehrere Förderbänder ermöglicht, die aus dem erfindungsgemäßen Förderbandglied gebildet sind und somit eine gute Anpassbarkeit an bestimmte Fördersituationen erlaubt. Die Verbindungsvorrichtung ist vorzugsweise zur starren Kopplung der Förderbandglieder ausgebildet, wenngleich für bestimmte Anwendungsfälle auch eine gelenkige oder elastische Kopplung vorteilhaft sein könnte. Wiederum bietet es sich an, die seitliche Verbindungsvorrichtung so auszubilden, dass baugleiche Förderbandglieder miteinander gekoppelt werden können und auf diese Weise eine beliebige, mehrfache Aneinanderreihung solcher Förderbandglieder möglich wird.

Es ist weiterhin bevorzugt, wenn das erfindungsgemäße Förderbandglied aus einem lebensmittelgeeigneten Hartkunststoffmaterial ausgebildet ist, um es auf diese Weise in lebensmitteltechnisch relevanten Bereichen einsetzen zu können.

Ein weiterer Aspekt der Erfindung ist ein Förderband, welches aus mehreren miteinander gekoppelten Förderbandgliedern der zuvor beschriebenen Art zusammengesetzt ist.

Sowohl das erfindungsgemäße Förderband als auch die erfindungsgemäße Fördervorrichtung umfassen eine Mehrzahl der zuvor beschriebenen Förderbandglieder. Der Fachmann erkennt, dass Merkmale, die im Zusammenhang mit der erfindungsgemäßen Fördervorrichtung, dem erfindungsgemäßen Förderbandglied oder dem erfindungsgemäßen Förderband beschrieben worden sind, nicht auf die jeweilige Produktform beschränkt sind, sondern allgemein auf ein einzelnes Förderbandglied, eine Förderbandvorrichtung oder ein Förderband anwendbar sind.

Schließlich ist ein weiterer Aspekt der Erfindung ein Verfahren nach Anspruch 12. Das erfindungsgemäße Verfahren kann insbesondere mit der erfindungsgemäßen Fördervorrichtung durchgeführt werden und eignet sich zur Vertikalförderung von Eiern.

Eine bevorzugte Ausführungsform wird anhand der Zeichnungen beschrieben. Es zeigen:
Fig. 1: Eine perspektivische Ansicht von schräg vorne oben eines erfindungsgemäßen Eierelevators mit vertikal fünffach gestapelter Längsförderbandanordnung und einem Querband,
Fig. 2: Eine perspektivische Detailansicht des Umlenkbereichs des Eierelevators gemäß Fig. 1 mit entfernter Deckplatte,
Fig. 3: Eine schematische, teilgeschnittene Seitenansicht des Eierelevators gem. Fig. 1,
Fig. 4: Eine geschnittene Seitenansicht einer oberen Umlenkeinrichtung eines erfindungsgemäßen Eierelevators mit aufgelegtem Förderband,
Fig. 5: Eine perspektivische Ansicht einer zweiten Ausführungsform eines einzelnen, erfindungsgemäßen Förderbandglieds,
Fig. 6: Eine perspektivische Ansicht eines Ausschnitts eines erfindungsgemäßen Förderbands, zusammengesetzt aus sieben einzelnen Förderbandgliedern,

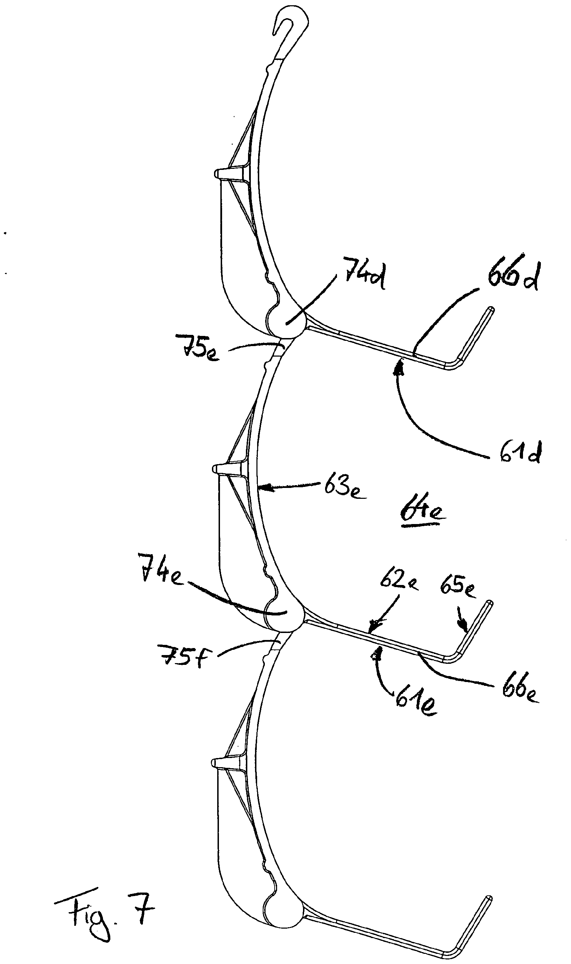

Fig. 7: Eine Seitenansicht des Förderbandausschnitts gemäß Fig. 6, und
Fig. 8: Einen Ablauf in siebzehn Teilsequenzen des Durchlaufs eines Eies in einem Produkteinzelfach des erfindungsgemäßen Förderbands durch eine obere Umlenkeinrichtung.

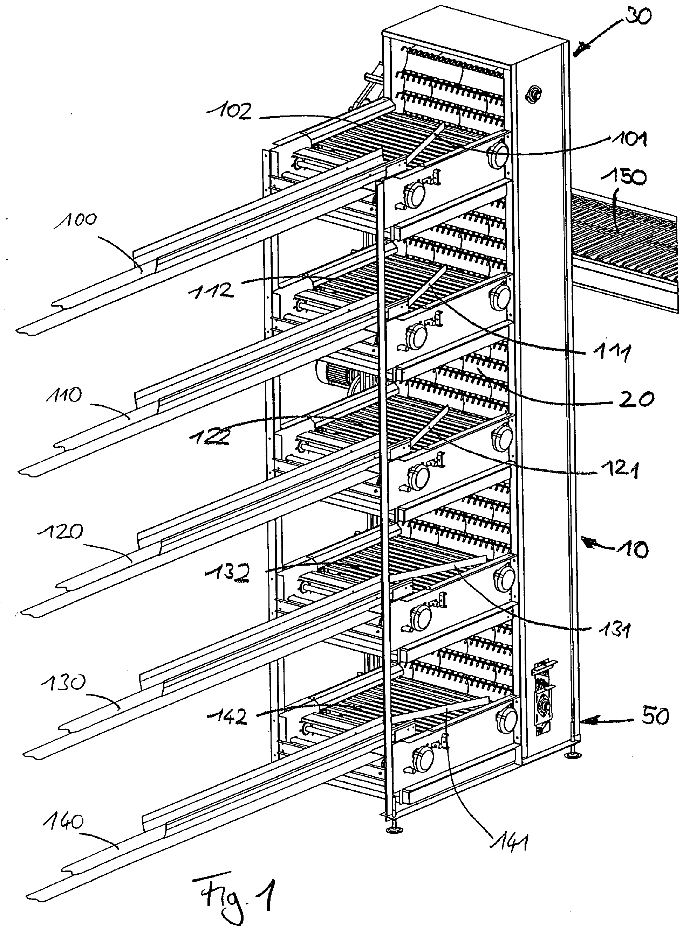

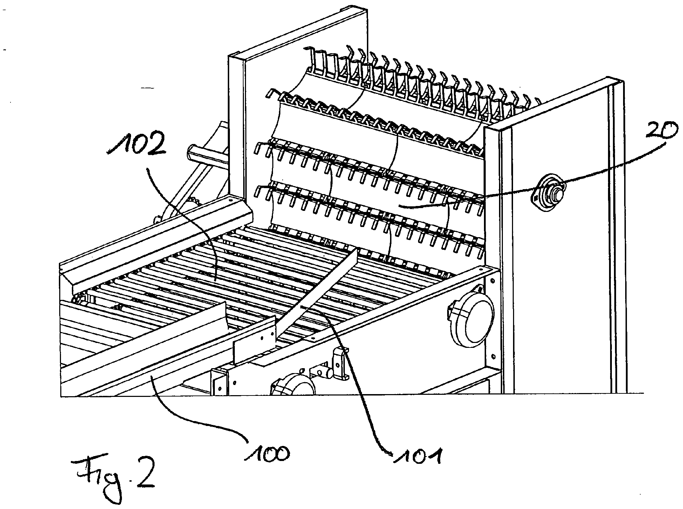

Der in Fig. 1 und 2 dargestellte Eierelevator 10 dient dazu, die über Längsförderbänder 100-140, von denen in den Figuren jeweils nur ein Endabschnitt dargestellt ist, angelieferten Hühnereier auf ein Querband 150 zu fördern. Jedes Längsförderband 100-140 weist eine Breite auf, die etwas größer als die geförderten Eier ist und fördert die Eier zu einem jeweiligen Stabbandfördererer 102-142, der breiter als das entsprechende Längsförderband 100-140 ist. Die Stabbandförderer 102-142 sind etwa ebenso breit wie der Eierelevator 10 und dient dazu, die von den Längsförderbändern zugeführten Eier zum Eierelevator zu fördern und dabei über die Breite des Eierelevators so zu verteilen, dass keine Kollisionen zwischen bereits in einem Einzelfach abgelegten Eiern und neu in darüber liegenden Etagen hinzugeförderten Eiern auftreten.

Der Eierelevator 10 weist ein Förderband mit einem aufwärts laufenden Förderbandtrumm 20, einen oberen Umlenkbereich 30, einen in den Figuren 1 und 2 nicht erkennbaren, abwärts laufenden Förderbandtrumm 40 sowie eine untere Umlenkeinrichtung 50 auf. Das Förderband, welches den Förderbandtrumm 20 und 40 ausbildet, ist als Endlosförderband ausgebildet und wird in der oberen und unteren Umlenkeinrichtung 30,50 umgelenkt.

Das Förderband 20,40 und die Stabbandförderer 102-142 weisen eine im Wesentlichen übereinstimmende Förder- bzw. Stabbandbreite auf, die es ermöglicht, dass bei einer für einen sicheren Betrieb maximal möglichen Fördergeschwindigkeit eine für die Stallgröße bzw. Legeleistung ausreichende Anzahl von Eiern gefördert werden kann.

Jedes Längsförderband 100-140 führt die Eier einem jeweiligen Stabbandförderer 102-142 zu, der eine Ablenkeinrichtung 101-141 auf weist, die so ausgerichtet ist, dass die von dem Längsförderband angelieferten Eier einem bestimmten Bereich des Förderbands 20,40 zugeleitet werden. Jeder Bereich erstreckt sich über eine bestimmte Breite des Förderbands 20,40 und die Bereiche, auf welche die von den einzelnen Längsförderbändern angelieferten Eier auf den Stabbandförderern in den fünf Etagen verteilt werden, überschneiden sich nicht, so dass sichergestellt ist, dass ein Ei nie in einen Bereich gelenkt wird, in dem bereits ein Ei von einem darunter angeordneten Stabbandförderer abgelegt worden ist.

Die im aufwärts gerichteten Förderbandtrumm 20 abgelegten Eier durchlaufen die obere Umlenkeinrichtung 30 und werden danach im abwärts gerichteten Förderbandtrumm 40 zum Querband 150 gefördert und auf diesem Querband abgelegt.

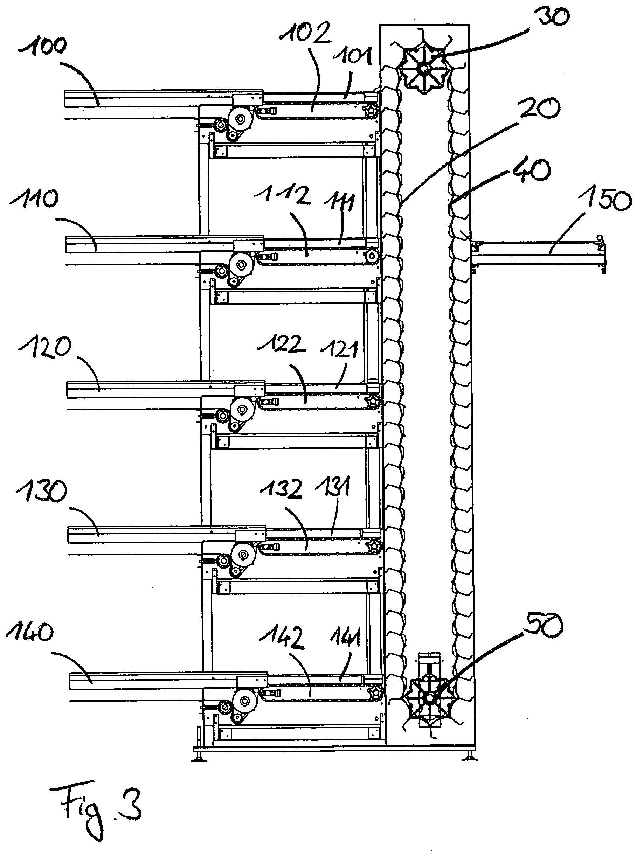

Wie gut in Fig. 3 zu erkennen ist, sind die Längsförderbänder 100-140 und die Stabbandförderer 102-142 vertikal gleichmäßig voneinander beabstandet und übereinander gestapelt. Jeder Stabbandförderer 102-142 fördert die Eier in den senkrecht verlaufenden, vertikal aufwärts fördernden Förderbandtrumm 20 und legt sie in einem Einzelfach des Förderbands 20,40 ab.

Das Querband 150 ist im dargestellten Beispiel in Höhe des zweithöchsten Längsförderbandes 110 angeordnet, könnte jedoch in beliebiger Höhe entlang des abwärts gerichteten Förderbandtrumms 40 angeordnet sein.

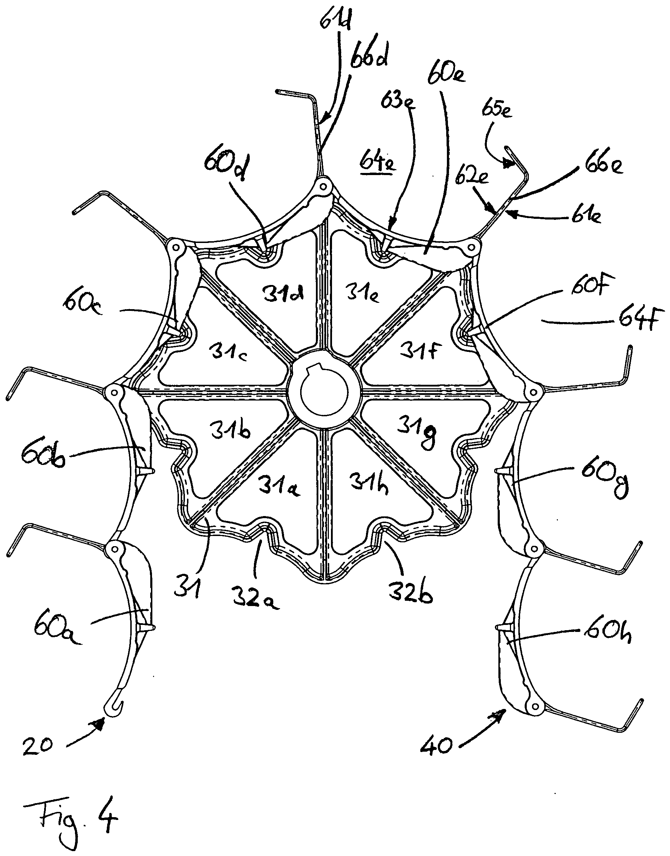

In Fig. 4 ist die obere Umlenkeinrichtung 30 mit aufgelegtem Förderband in Seitenansicht zu erkennen. Das Förderband weist eine Vielzahl aneinander gekoppelter Förderbandglieder 60a-h auf. Jedes Förderbandglied ist identisch aufgebaut. Der Aufbau jedes Förderbandglieds wird beispielhaft anhand des Förderbandglieds 60e erläutert.

Das Förderbandglied 60e weist eine erste Auflagefläche 61e auf, die durch eine Vielzahl paralleler und quer zur Förderrichtung nebeneinander angeordneter Streben 66e ausgebildet wird, wie aus Fig. 4, 5 und 6 zu erkennen ist.

Auf der Rückseite der Auflagefläche 61e ist eine weitere Auflagefläche 62e ausgebildet. Einstückig mit den die Auflageflächen 61e,62e ausbildenden Streben 66e verbunden ist eine vollflächige Bodenfläche 63e.

Die Bodenfläche 63e dient dazu, ein in einem Einzelfach 64e des Förderbandglieds 60e abgelegtes Produkt abzustützen, wenn die obere Umlenkeinrichtung durchlaufen wird. Die erste Auflagefläche 61e ist im aufwärts verlaufenden Förderbandtrumm schräg nach außen und oben verlaufend, so dass ein im Nachbar-Einzelfach 64f abgelegtes Produkt bei Aufwärtsförderung im aufwärts gerichteten Förderbandtrumm auf der ersten Auflagefläche 61e sicher abgelegt ist. Die erste Auflagefläche 61e dient somit dem Nachbarfach 64f als erste Auflagefläche. Dementsprechend dient eine erste Auflagefläche 61d eines auf der anderen Seite benachbarten Förderbandglieds einem in dem Einzelfach 64e abgelegten Produkt bei Aufwärtsförderung als erste Auflagefläche.

Die Umlenkeinrichtung 30 umfasst eine drehbar gelagerte Umlenkrolle 31, die im dargestellten Beispiel in der Grundform achteckig ausgebildet ist und acht sich über einen Teilumfang erstreckende Aufnahmeabschnitte 31a-h für jeweils genau ein Förderbandglied aufweist.

Jedes Teilsegment 31a-h weist eine radial einwärts gerichtete Einkerbung auf, um eine entsprechend ausgeformte Rippe auf der Rückseite der Bodenfläche 63e jedes Förderbandglieds aufzunehmen und hierdurch einen Formschluss zwischen der Umlenkrolle und dem Förderband herzustellen.

Die zweite Auflagefläche 62e ist im abwärts gerichteten Förderbandtrumm 40 schräg nach außen unten geneigt, so dass im Einzelfach 64e abgelegte Produkte nach radial auswärts von der Bodenfläche weg rollen. Damit diese Produkte nicht aus dem Einzelfach 64e herausrollen können, sind die Streben, welche die Auflagefläche 62e ausbilden, an ihrem äußerem Ende etwa rechtwinklig umgebogen, so dass ihre Enden im abwärts gerichteten Förderbandtrumm nach oben weisen. Ein im Einzelfach 64e abgelegtes Produkt rollt daher nach außen bis es auf den Auflageflächen 62e,65e zu liegen kommt. Die Auflageflächen 62e,65e bilden somit eine zweite Auflagefläche zur Abstützung der Produkte bei Abwärtsförderung.

Die Bodenfläche 63e ist in einem gleichmäßigen Krümmungsradius nach radial einwärts in Bezug auf die Umlenkrolle 31 gewölbt, so dass sie zum Einzelfach 64e hin eine konkav ausgewölbte Mulde ausbildet. Auf diese Weise kann ein Ei bei Durchlaufen der Umlenkeinrichtung 30 sanft von der unteren Auflagefläche 61d entlang der Bodenfläche 63e rollen, bis es entlang der Auflagefläche 62e bis zu der Auflagefläche der umgebogenen Spitzen 65e rollt. Der Krümmungsradius der Bodenfläche 63e ist so gewählt, dass bei Durchlaufen einer Umlenkeinrichtung 30 mit dem dargestellten Umlenkradius sichergestellt ist, dass das von der unteren Auflagefläche 61d zur oberen Auflagefläche 62e,65e rollende Ei beim Anstoßen an die obere Auflagefläche 62e,65e keinen Schaden nimmt.

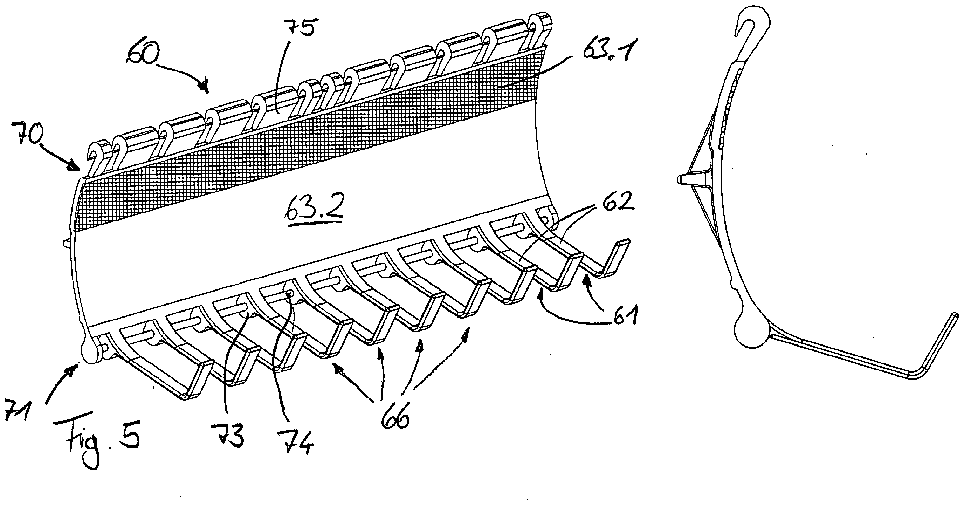

Das in Fig. 5 abgebildete Ausführungsbeispiel ist im wesentlichen identisch mit den in den anderen Figuren abgebildeten Förderbandgliedern, weist jedoch eine Bodenfläche auf, die in einen ersten Bodenflächenabschnitt und einen zweiten Bodenflächenabschnitt unterteilt ist. Der erste Bodenflächenabschnitt ist ein sich über die gesamte Breite des Förderbandglieds erstreckender Dämpfungswandabschnitt 63.1 in Form eines Materialstreifens aus einem dämpfenden Schaumstoffmaterial und ist in einem Bereich angeordnet, in dem die von den Stabbandförderern dem Förderbandglied zugelieferten Eier anstoßen, nachdem sie über die Auflagefläche 61 abgerollt sind. Die Dämpfungswirkung des Dämpfungswandabschnitts 63.1 wird erreicht durch eine reversible, lokale elastische Verformung des Schaumstoffmaterials im Anstoßbereich des Eis. Der zweite Bodenflächenabschnitt 63.2 ist aus dem gleichen Material gefertigt wie der übrige Rest des Förderbandglieds und verhält sich gegenüber den Eiern im Gegensatz zum Dämpfungswandabschnitt im Wesentlichen unelastisch und unplastisch. Der Übergang zwischen Dämpfungswandabschnitt 63.1 und dem zweiten Bodenflächenabschnitt 63.2 verläuft horizontal und quer zur Förderrichtung und ist eben ausgebildet, indem das Schaumstoffmaterial in eine Vertiefung eingebettet ist, deren Tiefe der Stärke des Schaumstoffmaterials entspricht.

Wie in Fig. 5 gezeigt, ist an beiden Seiten der Bodenfläche 63.1, 63.2 des Förderbandsglieds 60 eine Kopplungseinrichtung 70,71 ausgebildet. In dem Bereich des zweiten Bodenflächenabschnitts 63.2, in dem diese in eine Vielzahl von Streben 66 übergeht, ist eine sich quer zur Förderrichtung und in Längsrichtung der Bodenfläche 63.1, 63.2 erstreckende Achse 72 angeordnet, die in mehreren Achsösen, die einstückig am Fuß jeder Strebe der zweiten Auflagefläche 62 ausgebildet ist, geführt ist.

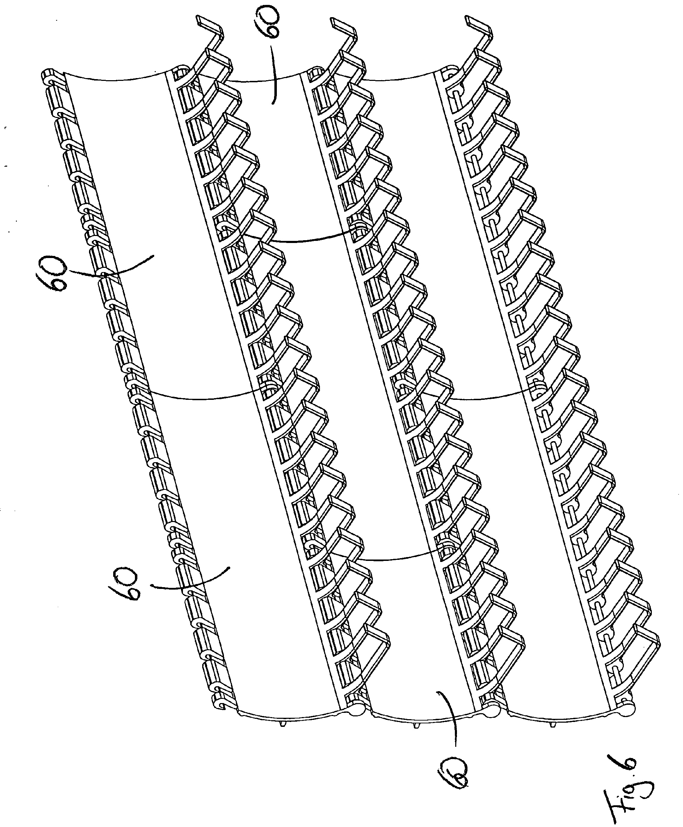

Zwischen den Achsösen 73 ist jeweils ein freier Achsabschnitt 74 der Achse 72 angeordnet. In die freien Achsabschnitte 74 können Vorsprünge 75 einrasten, die an der gegenüberliegenden Seite der Bodenfläche 63 angeformt sind und an ihrem Ende hakenförmig umgebogen sind. Auf diese Weise kann das Förderbandglied 60 auf der Seite ihrer Kopplungseinrichtung 71 mit einer Kopplungseinrichtung 70 eines gleichartigen Förderbandglieds 60 in solcher Weise gekoppelt werden, dass eine Schwenkbewegung um die Achse 72 zwischen den beiden gekoppelten Förderbandgliedern möglich ist, wie in Fig. 6 abgebildet.

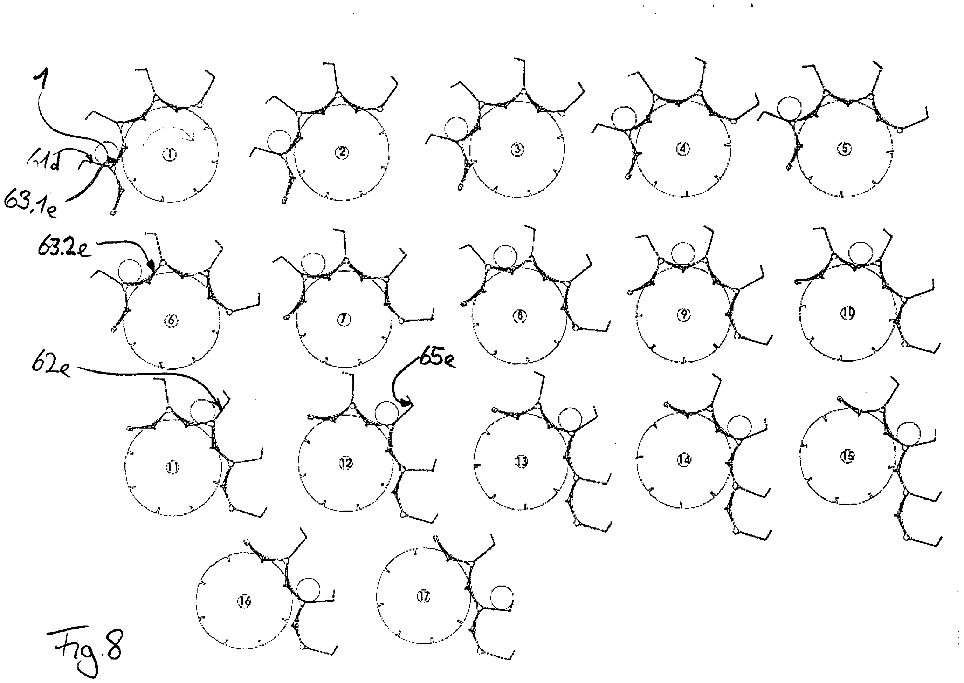

Der Bewegungsablauf eines Eies 1 bei Durchlaufen der oberen Umlenkeinrichtung kann in Fig. 8 in 17 Sequenzen von links oben nach rechts unten zeilenweise abgelesen werden.

Sequenzabschnitt 1 zeigt die Situation kurz nachdem das Ei über die erste Auflagefläche 61 gerollt ist und an der Bodenfläche angeschlagen ist. Im Fall des Ausführungsbeispiels gemäß Fig. 5 liegt das Ei nun an dem Dämpfungswandabschnitt 63.1 und der ersten Auflagefläche 61 an.

In den Sequenzabschnitten 1 bis etwa 5 liegt das Ei 1 auf der ersten Auflagefläche 61d auf. Etwa ab dem Sequenzbild 6 überquert das Einzelfach 64e den höchsten Punkt der Umlenkeinrichtung 30, wobei das Ei 1 der Schwerkraft folgend stets am tiefsten Punkt der gewölbten Bodenfläche 63e sich befindet und auf der Bodenfläche 63e abrollt.

Etwa ab dem Sequenzbild 12 ist das Ei in Kontakt mit der oberen Auflagefläche 62e und bleibt in dieser Position etwa bis zum Sequenzbild 16. Zwischen Sequenzbild 16 und Sequenzbild 17 rollt das Ei radial auswärts zur umgebogenen Spitze 65e und liegt hiernach sicher auf der oberen Auflagefläche 62e,65e an, um auf das Querband abgelegt zu werden.

Im dargestellten Ausführungsbeispiel sind die Übergänge zwischen der unteren Auflagefläche 61d, der Bodenfläche 63e und der oberen Auflagefläche 62e nahezu ohne eine unstete Änderung der Flächenausrichtung ausgestaltet, d.h. im Wesentlichen abgerundet. Dies ist jedoch nicht notwendigerweise erforderlich. Für die Funktionsweise der erfindungsgemäßen Vorrichtung gemäß des dargestellten Ausführungsbeispiels ist es im Wesentlichen maßgeblich, dass die Bodenfläche mit einem entsprechend der Umlenkrolle gewählten Wölbungsradius ausgewölbt ist, um ein sicheres und langsames Abrollen des Eies von der unteren Auflagefläche zur oberen Auflagefläche sicherzustellen.

## Patentansprüche

1. Fördervorrichtung für Eier (1), umfassend:
- ein Förderband (20,40) mit
i. zumindest einem Einzelfach (64e) zur Aufnahme zumindest eines Eies,
ii. einem aufwärts gerichteten Förderbandstrang (20) und
iii. einem abwärts gerichteten Förderbandstrang (40),
- eine obere Umlenkeinrichtung (30) zum Umlenken des Förderbands aus dem aufwärts gerichteten Förderbandstrang in den abwärts gerichteten Förderbandstrang,
- wobei das Einzelfach durch
i. eine erste Auflagefläche (61d) zur Abstützung eines darin abgelegten Eies bei der Aufwärtsförderung,
ii. eine zweite Auflagefläche (62e,65e) zur Abstützung eines darin abgelegten Eies bei der Abwärtsförderung, und
iii. eine Bodenfläche (63e) zur Abstützung des Eies bei der Bewegung des Förderbands über die obere Umlenkeinrichtung
begrenzt ist,
- wobei das Förderband aus einer Vielzahl miteinander um eine quer zur Förderrichtung liegende Achse schwenkbar gekoppelter Förderbandglieder zusammengesetzt ist und jedes Förderbandglied einen die Bodenfläche ausbildenden Bodenwandabschnitt eines Einzelfachs und einen sich etwa senkrecht zur Förderrichtung erstreckenden Wandabschnitt aufweist, der die erste oder zweite Auflagefläche des Einzelfachs und die zweite bzw. erste Auflagefläche eines Einzelfachs eines benachbart angekoppelten Förderbandglieds ausbildet,
**dadurch gekennzeichnet, dass** jedes Förderbandglied die Bodenfläche eines Einzelfachs umfasst und die Bodenfläche (63e) des Einzelfachs (64e) zumindest bei Durchlaufen der oberen Umlenkeinrichtung eine Wölbung aufweist, die eine Krümmung besitzt, die entgegengesetzt zum Förderbandverlauf in der Umlenkeinrichtung ist und die Wölbung so geformt ist, dass ein in dem Einzelfach abgelegtes Ei bei Durchlauf der oberen Umlenkeinrichtung (30) so von der ersten Auflagefläche (61d) zu der zweiten Auflagefläche (62e) geführt wird, dass eine für das Ei unkritische Stoßkraft zwischen dem Ei und der zweiten Auflagefläche auftritt.

2. Fördervorrichtung nach dem vorhergehenden Anspruch,
**dadurch gekennzeichnet, dass**
- die Wölbung der Bodenfläche (63e) eine Krümmung besitzt, die entgegengesetzt zum Förderbandverlauf in der Umlenkeinrichtung ist, und/oder
- die obere Umlenkeinrichtung eine Umlenkrolle (31) umfasst und die Wölbung der Bodenfläche (63e) entgegen der Krümmung der Umlenkrolle verläuft und einen Krümmungsradius aufweist, der größer oder gleich dem Radius der Umlenkrolle ist.

3. Fördervorrichtung nach einem der vorhergehenden Ansprüche,
**dadurch gekennzeichnet, dass**
- vorzugsweise das Förderband aus einer Vielzahl von Förderbandgliedern (60) zusammengesetzt ist, die miteinander gekoppelt sind,
- weiterhin vorzugsweise jedes Förderbandglied zumindest ein Einzelfach (64e) umfasst, und
- vorzugsweise jedes Förderbandglied (60) zumindest einen sich etwa senkrecht zur Förderrichtung erstreckenden Wandabschnitt aufweist, an dem die erste und/oder zweite Auflagefläche (61e,62e) ausgebildet ist.

4. Fördervorrichtung nach einem der vorhergehenden Ansprüche,
**dadurch gekennzeichnet, dass** zwischen der Auflagefläche für die Aufwärtsförderung und der Bodenfläche eine Bremsrampe ausgebildet ist, die so ausgerichtet ist, dass ein über die Auflagefläche für die Aufwärtsförderung in Richtung der Bodenfläche bewegtes Ei durch Schwerkrafteinfluss abgebremst wird, bevor es auf die Bodenfläche trifft.

5. Fördervorrichtung nach einem der vorhergehenden Ansprüche,
**dadurch gekennzeichnet, dass** die Bodenfläche zumindest in dem Bereich, in dem ein von der Auflagefläche für die Aufwärtsförderung zur Bodenfläche bewegtes Ei anstößt einen Dämpfungswandabschnitt (63.1) aufweist, wobei vorzugsweise der Dämpfungswandabschnitt (63.1) plan und stufenfrei zur Bodenfläche (63.2) angeordnet ist.

6. Förderbandglied (60) für eine Fördervorrichtung nach einem der vorhergehenden Ansprüche, umfassend:
- zumindest ein Einzelfach (64e) zur Aufnahme eines Eies mit
i. einer ersten Auflagefläche (62e) zur Abstützung eines darin abgelegten ersten Eies bei der Aufwärts- oder Abwärtsförderung,
ii. einer Bodenfläche (63e) zur Abstützung des ersten Eies bei der Bewegung des Förderbands über eine obere Umlenkeinrichtung, und
**dadurch gekennzeichnet, dass** die Bodenfläche des Einzelfachs zumindest bei Durchlaufen der oberen Umlenkeinrichtung eine Wölbung aufweist, die eine Krümmung besitzt, die entgegengesetzt zum Förderbandverlauf in der Umlenkeinrichtung ist und die Wölbung so geformt ist, dass das in dem Einzelfach abgelegte erste Ei bei Durchlauf der oberen Umlenkeinrichtung so von der ersten Auflagefläche zu einer zweiten Auflagefläche (61 d) zur Abstützung des Eies bei der Abwärts- bzw. Aufwärtsförderung geführt wird, dass eine für das erste Ei unkritische Stoßkraft zwischen dem Ei und der zweiten Auflagefläche auftritt, wobei vorzugsweise das Förderbandglied aus einem lebensmittelgeeignetem Hartkunststoffmaterial ausgebildet ist.

7. Förderbandglied nach dem vorhergehenden Anspruch,
**dadurch gekennzeichnet, dass**
- die zweite Auflagefläche an einem Wandabschnitt des Förderbandglieds ausgebildet ist oder
- die zweite Auflagefläche (61d) an einem Wandabschnitt eines benachbart angekoppelten, zweiten Förderbandglied ausgebildet ist, wobei vorzugsweise erstes und zweites Förderbandglied baugleich sind und jeweils einen Wandabschnitt aufweisen, der eine erste (62e) und eine zweite Auflagefläche (61e) definiert.

8. Förderbandglied nach einem der beiden vorhergehenden Ansprüche,
**dadurch gekennzeichnet, dass**
- die Wölbung der Bodenfläche eine in Richtung des Einzelfachs konkav ausgebildete Krümmung besitzt und/oder
- die Bodenfläche
i. eine Krümmung aufweist, die entgegengesetzt zu der Krümmung einer Umlenkrolle ist, mit der ein aus mehreren gekoppelten Förderbandgliedern zusammengesetztes Förderband umgelenkt wird, und
ii. einen gleichmäßigen Krümmungsradius aufweist, der vorzugsweise größer oder gleich dem Radius dieser Umlenkrolle ist.

9. Förderbandglied nach einem der vorhergehenden Ansprüche 6-8,
**gekennzeichnet durch** eine Kopplungsvorrichtung zur Kopplung mit einem gleichartigen Förderbandglied, wobei die Kopplungsvorrichtung (71) an der in Förderrichtung vorne liegenden Kante ausgebildetund dazu ausgebildet ist, das Förderbandglied um eine quer zur Förderrichtung und in Förderbandebene liegende Achse schwenkbar mit einer Kopplungsvorrichtung (70) an der in Förderrichtung hinten liegenden Kante des gleichartigen Förderbandglieds zu koppeln.

10. Förderbandglied nach einem der vorhergehenden Ansprüche 6-9,
**dadurch gekennzeichnet, dass** sich das Einzelfach quer zur Förderrichtung und in Förderbandebene längs erstreckt und mehrere Eier nebeneinander aufnehmen kann und/oder **gekennzeichnet durch** eine seitliche Verbindungsvorrichtung zur starren Kopplung des Förderbandglieds mit einem in Förderrichtung neben dem Förderbandglied angeordneten weiteren Förderbandglied in einer solchen Weise, dass die Einzelfächer der beiden Förderbandglieder ein sich quer zur Förderrichtung und in Förderbandebene längs erstreckendes Einzelfach ausbilden, das mehrere Eier nebeneinander aufnehmen kann.

11. Förderband, umfassend mehrere miteinander gekoppelte Förderbandglieder nach einem der vorhergehenden Ansprüche 6-10.

12. Verfahren zum Fördern von Eiern, mit den Schritten:
- Ablegen eines Eies (1) auf einer ersten Auflagefläche (61d) eines Einzelfachs (64e) eines Förderbands in einem aufwärts verlaufenden Förderbandstrang (20),
- Umlagern des Eies auf eine zweite Auflagefläche (62e) des Einzelfachs (64e) beim Umlenken des Förderbands mit dem Ei aus der Aufwärtsförderrichtung des aufwärts gerichteten Förderbandstrang in eine Abwärtsförderrichtung eines abwärts verlaufenden Förderbandstrangs (40), wobei das Förderband aus einer Vielzahl von miteinander gekoppelten Förderbandgliedern zusammengesetzt ist und die erste Auflagefläche an einem ersten Förderbandglied und die zweite Auflagefläche an einem zweiten Förderbandglied, das mit dem ersten Förderbandglied benachbart gekoppelt ist, ausgebildet ist,
- Abgeben des Eies von der zweiten Auflagefläche,
**dadurch gekennzeichnet, dass** das Ei sich beim Umlagern über eine konkav in Richtung des Einzelfachs gewölbte Bodenfläche (63e) bewegt, die so geformt ist, dass beim Umlagern eine für das Ei unkritische Stoßkraft zwischen dem Ei und der zweiten Auflagefläche auftritt.

## Claims

1. Conveyor device for eggs (1), comprising:
- a conveyor belt (20, 40) having
i. at least one individual compartment (64e) for receiving at least one egg,
ii. an upwardly directed conveyor belt strand (20) and
iii. a downwardly directed conveyor belt strand (40),
- an upper deflection device (30) for deflecting the conveyor belt from the upwardly directed conveyor belt strand into the downwardly directed conveyor belt strand,
- where the individual compartment is delimited by
i. a first support surface (61d) for supporting an egg deposited therein during upward conveying,
ii. a second support surface (62e,65e) for supporting an egg deposited therein during downward conveying, and
iii. a bottom surface (63e) for supporting the egg during movement of the conveyor belt over the upper deflection device,
- wherein the conveyor belt is composed of a plurality of conveyor belt members coupled to one another so as to be pivotable about an axis lying transversely to the conveying direction, and each conveyor belt member has a bottom wall portion of an individual compartment forming the bottom surface and a wall portion extending approximately perpendicularly to the conveying direction, which wall portion forms the first or second support surface of the individual compartment and the second or first support surface of an individual compartment of an adjacently coupled conveyor belt member,
**characterized in that** each conveyor belt member comprises the bottom surface of an individual compartment and the bottom surface (63e) of the individual compartment (64e) at least as it passes through the upper deflection device, has a curvature which is opposite to the conveyor belt path in the deflector, and the curvature is so shaped that an egg deposited in said individual compartment is guided from said first support surface (61d) to said second support surface (62e) as it passes through said upper deflection device (30) such that an impact force between said egg and said second support surface occurs which is not critical to said egg.

2. Conveyor device according to the preceding claim,
**characterized in that**
- the curvature of the bottom surface (63e) has a curvature which is opposite to the course of the conveyor belt in the upper deflection device, and/or
- the upper deflection device comprises a deflector roller (31) and the curvature of the bottom surface (63e) runs opposite to the curvature of the deflector roller and has a radius of curvature which is greater than or equal to the radius of the deflector roller.

3. Conveyor device according to any one of the preceding claims,
**characterized in that**
- preferably the conveyor belt Is composed of a plurality of conveyor belt members (60) which are coupled to one another,
- further preferably each conveyor belt member comprises at least one individual compartment (64e), and
- preferably each conveyor belt member (60) comprises at least one wall portion (64e) extending perpendicular to the conveying direction, on which wall portion the first and/or second support surface (61e, 62e) is formed.

4. A conveyor device according to any one of the preceding claims, **characterized in that** a braking ramp is formed between the support surface for upward conveying and the bottom surface, said braking ramp being oriented such that an egg moving over the support surface for upward conveying toward the bottom surface is braked by gravity before hitting the bottom surface.

5. Conveyor device according to one of the preceding claims, **characterized in that** the bottom surface has a damping wall portion (63.1) at least in the area where an egg moved from the support surface for upward conveying to the bottom surface abuts, preferably the damping wall portion (63.1) being arranged planar and step-free with respect to the bottom surface (63.2).

6. A conveyor belt member (60) for a conveyor device according to any one of the preceding claims, comprising:
- at least one individual compartment (64e) for receiving an egg with
i. a first support surface (62e) for supporting a first egg deposited therein during upward or downward conveying,
ii. a bottom surface (63e) for supporting the first egg during movement of the conveyor belt over an upper deflection device, and
**characterized in that** the bottom surface of the individual compartment, at least when passing through the upper deflection device, has a curvature which is opposite to the course of the conveyor belt in the deflection device, and the curvature is shaped in such a way that the first egg deposited in the individual compartment as it passes through the upper deflection device from the first the first support surface to a second support surface (61 d) for supporting the egg during downward or upward conveying, respectively, is guided in such a manner that an impact force onto the first egg occurs between the egg and the second support surface, which is not critical for the egg, wherein preferably the conveyor belt member is made of a hard plastic material suitable for foodstuffs.

7. A conveyor belt member according to the preceding claim,
**characterized in that**
- the second support surface is formed on a wall portion of the conveyor belt member, or
- the second support surface (61 d) is formed on a wall portion of an adjacently second conveyor belt member coupled thereto, wherein preferably the first and second conveyor belt members are identical in construction and each have a wall portion which defines a first (62e) and a second support surface (61e).

8. Conveyor belt member according to either of the preceding two claims, **characterized in that**
- the curvature of the bottom surface has a curvature which is concave in the direction of the individual compartment and/or
- the bottom surface
i. has a curvature which is opposite to the curvature of a deflection roller with which a conveyor belt composed of a plurality of coupled conveyor belt members is deflected, and
ii. has a uniform radius of curvature which is preferably is greater than or equal to the radius of this deflection roller.

9. Conveyor belt member according to any one of the preceding claims 6-8, **characterized by** a coupling device for coupling with a similar conveyor belt member, the coupling device (71) being formed at the edge lying in front in the conveying direction and being designed to couple the conveyor belt member pivotably about an axis lying transversely to the conveying direction and in the conveyor belt plane to a coupling device (70) at the edge of the similar conveyor belt member lying at the rear in the conveying direction.

10. A conveyor belt member according to any one of the preceding claims 6-9, **characterized in that** the individual compartment extends longitudinally transversely to the direction of conveyance and in the plane of the conveyor belt and can receive a plurality of eggs side by side and/or **characterized by** a lateral connecting device for rigidly coupling the conveyor belt member to a further conveyor belt member arranged adjacent to the conveyor belt member in the direction of conveyance in such a manner that the individual compartments of the two conveyor belt members form an individual compartment extending longitudinally transversely to the direction of conveyance and in the plane of the conveyor belt, which can receive a plurality of eggs side by side.

11. A conveyor belt comprising a plurality of conveyor belt members according to any one of the preceding claims 6-10 coupled to each other.

12. A method for conveying eggs, comprising the steps:
- depositing an egg (1) on a first support surface (61 d) of an individual compartment (64e) of a conveyor belt in an upwardly extending conveyor belt strand (20),
- transferring the egg onto a second support surface (62e) of the individual compartment (64e) while deflecting the conveyor belt with the egg from the upward conveying direction of the upward conveyor belt strand to a downward conveying direction of a downward conveyor belt strand (40), wherein the conveyor belt is composed of a plurality of conveyor belt members coupled to each other and the first support surface is formed on a first conveyor belt member and the second support surface is formed on a second conveyor belt member coupled adjacent to the first conveyor belt member,
- dispensing of the egg from the second support surface,
**characterized in that** the egg moves during transferring over a bottom surface (63e) which is curved concavely in the direction of the individual compartment and which is shaped in such a way that, during transferring an impact force, which is not critical for the egg, is applied between the egg and the second support surface.

## Revendications

1. Dispositif de transport pour des œufs (1), comprenant :
- une bande transporteuse (20, 40) avec
i. au moins un compartiment individuel (64e) pour recevoir au moins un œuf,
ii. un tronçon de bande transporteuse dirigé vers le haut (20), et
iii. un tronçon de bande transporteuse dirigé vers le bas (40),
- un système de renvoi supérieur (30) pour renvoyer la bande transporteuse depuis le tronçon de bande transporteuse dirigé vers le haut dans le tronçon de bande transporteuse dirigé vers le bas,
- dans lequel le compartiment individuel est délimité par
i. une première surface d'appui (61d) pour soutenir un œuf qui y est déposé lors du transport vers le haut,
ii. une deuxième surface d'appui (62e, 65e) pour soutenir un œuf qui y est déposé lors du transport vers le bas, et
iii. une surface de fond (63e) pour soutenir l'œuf lors du déplacement de la bande transporteuse par l'intermédiaire du système de renvoi supérieur,
- dans lequel la bande transporteuse se compose d'une pluralité de maillons de bande transporteuse couplés les uns aux autres de manière à pouvoir pivoter autour d'un axe situé de manière transversale par rapport à la direction de transport et chaque maillon de bande transporteuse présente une section de paroi de fond, réalisant la surface de fond, d'un compartiment individuel et une section de paroi s'étendant de manière à peu près perpendiculaire par rapport à la direction de transport, qui réalise la première ou la deuxième surface d'appui du compartiment individuel et la deuxième ou la première surface d'appui d'un compartiment individuel d'un maillon de bande transporteuse accouplé de manière adjacente,
**caractérisé en ce que** chaque maillon de bande transporteuse comprend la surface de fond d'un compartiment individuel et la surface de fond (63e) du compartiment individuel (64e) présente au moins lors du passage du système de renvoi supérieur un bombement, qui possède une incurvation, qui est opposée par rapport au profil de bande transporteuse dans le système de renvoi et le bombement est formé de telle sorte qu'un œuf déposé dans le compartiment individuel est guidé lors du passage du système de renvoi supérieur (30) de telle sorte de la première surface d'appui (61d) vers la deuxième surface d'appui (62e), qu'une force d'impact non critique pour l'œuf apparaît entre l'œuf et la deuxième surface d'appui.

2. Dispositif de transport selon la revendication précédente,
**caractérisé en ce que**
- le bombement de la surface de fond (63e) possède une incurvation, qui est opposée par rapport au profil de bande transporteuse dans le système de renvoi, et/ou
- le système de renvoi supérieur comprend un galet de renvoi (31) et le bombement de la surface de fond (63e) s'étend à l'opposé de l'incurvation du galet de renvoi et présente un rayon d'incurvation, qui est supérieur ou égal au rayon du galet de renvoi.

3. Dispositif de transport selon l'une quelconque des revendications précédentes,
**caractérisé en ce que**
- de préférence la bande transporteuse se compose d'une pluralité de maillons de bande transporteuse (60), qui sont couplés les uns aux autres,
- par ailleurs de préférence chaque maillon de bande transporteuse comprend au moins un compartiment individuel (64e), et
- de préférence chaque maillon de bande transporteuse (60) présente au moins une section de paroi s'étendant de manière à peu près perpendiculaire par rapport à la direction de transport, sur laquelle la première et/ou la deuxième surface d'appui (61e, 62e) sont réalisées.

4. Dispositif de transport selon l'une quelconque des revendications précédentes,
**caractérisé en ce qu'**est réalisée entre la surface d'appui pour le transport vers le haut et la surface de fond une rampe de freinage, qui est orientée de telle sorte qu'un œuf déplacé au-dessus de la surface d'appui pour le transport vers le haut en direction de la surface de fond est ralenti sous l'effet de la gravité avant qu'il n'arrive sur la surface de fond.

5. Dispositif de transport selon l'une quelconque des revendications précédentes,
**caractérisé en ce que** la surface de fond présente au moins dans la zone, dans laquelle un œuf déplacé de la surface d'appui pour le déplacement vers le haut vers la surface de fond vient buter, une section de paroi d'amortissement (63.1), dans lequel de préférence la section de paroi d'amortissement (63.1) est disposée de manière plane et sans palier par rapport à la surface de fond (63.2).

6. Maillon de bande transporteuse (60) pour un dispositif de transport selon l'une quelconque des revendications précédentes, comprenant :
- au moins un compartiment individuel (64e) pour recevoir un œuf avec
i. une première surface d'appui (62e) pour soutenir un premier œuf qui y est déposé lors du déplacement vers le haut ou vers le bas,
ii. une surface de fond (63e) pour soutenir le premier œuf lors du déplacement de la bande transporteuse par l'intermédiaire d'un système de renvoi supérieur, et
**caractérisé en ce que** la surface de fond du compartiment individuel présente au moins lors du passage du système de renvoi supérieur un bombement, qui possède une incurvation, qui est opposée par rapport au profil de bande transporteuse dans la direction de renvoi et le bombement est formé de telle sorte que le premier œuf déposé dans le compartiment individuel est guidé lors du passage du système de renvoi supérieur de telle sorte depuis la première surface d'appui vers une deuxième surface d'appui (61d) pour soutenir l'œuf lors du transport vers le bas ou vers le haut, qu'une force d'impact non critique pour le premier œuf apparaît entre l'œuf et la deuxième surface d'appui, dans lequel de préférence le maillon de bande transporteuse est réalisé à partir d'un matériau en matière plastique dure convenant pour les denrées alimentaires.

7. Maillon de bande transporteuse selon la revendication précédente,
**caractérisé en ce que**
- la deuxième surface d'appui est réalisée sur une section de paroi du maillon de bande transporteuse, ou
- la deuxième surface d'appui (61d) est réalisée sur une section de paroi d'un deuxième maillon de bande transporteuse accouplé de manière adjacente, dans lequel de préférence le premier et le deuxième maillon de bande transporteuse sont de structure identique et présentent respectivement une section de paroi, qui définit une première (62e) et une deuxième surface d'appui (61e).

8. Maillon de bande transporteuse selon l'une quelconque des deux revendications précédentes,
**caractérisé en ce que**
- le bombement de la surface de fond possède une incurvation réalisée de manière concave en direction du compartiment individuel, et/ou
- la surface de fond
i. présente une incurvation, qui est opposée à l'incurvation d'un galet de renvoi, avec lequel une bande transporteuse se composant d'un ou de plusieurs maillons de bande de transport couplés est renvoyée, et
ii. présente un rayon d'incurvation homogène, qui est de préférence supérieur ou égal au rayon dudit galet de renvoi.

9. Maillon de bande transporteuse selon l'une quelconque des revendications 6 - 8,
**caractérisé par** un dispositif de couplage destiné à être couplé à un maillon de bande transporteuse similaire, dans lequel le dispositif de couplage (71) est réalisé sur l'arête située à l'avant dans la direction de transport et est réalisé pour coupler le maillon de bande transporteuse à un dispositif de couplage (70) sur l'arête, située à l'arrière dans la direction de transport, du maillon de bande transporteuse similaire de manière à pouvoir pivoter autour d'un axe situé de manière transversale par rapport à la direction de transport et dans le plan de bande transporteuse.

10. Maillon de bande transporteuse selon l'une quelconque des revendications précédentes 6 - 9,
**caractérisé en ce que** le compartiment individuel s'étend de manière transversale par rapport à la direction de transport et longitudinalement dans le plan de bande transporteuse et peut recevoir plusieurs œufs côte à côte et/ou **caractérisé par** un dispositif de liaison latéral pour coupler de manière rigide le maillon de bande transporteuse à un autre maillon de bande transporteuse disposé dans la direction de transport à côté du maillon de bande transporteuse d'une manière telle que les compartiments individuels des deux maillons de bande transporteuse réalisent un compartiment individuel s'étendant de manière transversale par rapport à la direction de transport et longitudinalement dans le plan de bande transporteuse, qui peut recevoir plusieurs œufs côte à côte.

11. Bande transporteuse comprenant plusieurs maillons de bande transporteuse couplés entre eux selon l'une quelconque des revendications précédentes 6 - 10.

12. Procédé pour transporter des œufs, avec les étapes :
- de dépôt d'un œuf (1) sur une première surface d'appui (61d) d'un compartiment individuel (64e) d'une bande transporteuse dans un tronçon de bande transporteuse (20) s'étendant vers le haut,
- de transfert de l'œuf sur une deuxième surface d'appui (62e) du compartiment individuel (64e) lors du renvoi de la bande transporteuse avec l'œuf depuis la direction de transport vers le haut du tronçon de bande transporteuse dirigé vers le haut dans une direction de transport vers le bas d'un tronçon de bande transporteuse (40) s'étendant vers le bas, dans lequel la bande transporteuse se compose d'une pluralité de maillons de bande transporteuse couplés les uns aux autres et la première surface d'appui est réalisée sur un premier maillon de bande transporteuse et la deuxième surface d'appui est réalisée sur un deuxième maillon de bande transporteuse, qui est couplé de manière adjacente au premier maillon de bande transporteuse,
- de distribution de l'œuf depuis la deuxième surface d'appui,
**caractérisé en ce que** l'œuf se déplace lors du transfert au-dessus d'une surface de fond (63e) bombée de manière concave en direction du compartiment individuel, qui est formée de telle sorte que lors du transfert une force d'impact non critique pour l'œuf apparaît entre l'œuf et la deuxième surface d'appui.
